# FASCICULE DE BREVET EUROPEEN

(11) **EP 1 160 213 B1**
(45) Date de publication et mention de la délivrance du brevet: **04.03.2009**
(21) Numéro de dépôt: 01401142.3
(22) Date de dépôt: 03.05.2001
(51) Int. Cl.: C03C 15/00

(54) **Nouveau procédé de dépolissage chimique du verre comprenant un rinçage avec une solution saline et objets dépolis obtenus par ce procédé**
Neues Verfahren für Mattierung von Glas, welches das Spülen mit einer Salzlösung beinhaltet und damit hergestellte matte Gegenstände
New frosting method for glass comprising a rinsing step with a salt solution and resulting frosted objects

(30) Priorité: 31.05.2000 FR 0007015
(43) Date de publication de la demande: 05.12.2001
(73) Titulaire: SOCIETE D'EXPLOITATION DE PRODUITS POUR LES INDUSTRIES CHIMIQUES, S.E.P.P.I.C., 75321 Paris Cédex 07 (FR)
(72) Inventeur: Trouvé, Gérard, 81100 Castres (FR); Bessoles, Yves, 81100 Castres (FR)
(74) Mandataire: Conan, Philippe Claude

(56) Documents cités:
- DD-A- 153 360
- FR-A- 2 320 275
- GB-A- 2 055 792
- DATABASE WPI Section Ch, Week 198425 Derwent Publications Ltd., London, GB; Class L01, AN 1984-157830 XP002159833 & SU 1 047 855 A (NOVIKOV I G), 15 octobre 1983 (1983-10-15)

## Description

L'invention concerne un nouveau procédé de dépolissage du verre par voie chimique.

On appelle dépolissage d'une lame de verre, l'action de le rendre translucide, sans être transparent en engendrant une opacité de l'une de ses surfaces. Il résulte de cette action, une multitude d'aspérités de quelques microns de profondeur qui, selon leur taille, conduisent à différents aspects macroscopiques de la surface ainsi traitée. On parle alors de verres dépolis brillants, de verres dépolis mats, de verres opaques ou de verres translucides.

Le dépolissage est généralement réalisé par sablage de la surface, quand elle est de grandes dimensions, par dépôt d'une couche mince ou par attaque chimique. Ce dernier procédé est plus particulièrement mis en oeuvre sur des petites surfaces ou sur des objets de forme plus ou moins compliquées. L'attaque chimique est souvent réalisée à l'aide d'ions fluorure, ceux-ci réagissant avec les ions silicium du verre. L'objet en verre est immergé, de quelques secondes à quelques minutes, soit dans un bain d'acide fluorhydrique concentré, soit dans un bain acide contenant un initiateur d'ions fluorure, comme le bifluorure d'ammonium. Le verre est ensuite rincé à l'eau. La demande de brevet britannique GB 2 055 792, décrit un procédé de traitement final de surface en verre comprenant une étape detraitement avec une solution alcaline contenant des particules inertes qui exercent une action abrasive.

Comme exemples de compositions connues de dépolissage du verre, il y a celle décrite dans le brevet allemand publié sous le numéro 1.596.961 qui contient de l'acide fluorhydrique, de l'hydrogénofluorure d'ammonium, appelé par la suite bifluorure d'ammonium, et de l'eau, celle décrite dans le brevet anglais publié sous le numéro 1.276.550 comprenant de l'acide fluorhydrique, un fluorure hydrosoluble, comme le bifluorure d'ammonium et un ou plusieurs acides aliphatiques carboxyliques comprenant de un à trois atomes de carbone, substitués ou non substitués par des radicaux comprenant un ou plusieurs atomes d'halogène et/ou un ou plusieurs groupes hydroxy ou amino, comme par exemple, l'acide formique, l'acide acétique, l'acide propionique, l'acide monochloroacétique, l'acide trichloroacétique ou l'acide glycolique ou encore, la composition décrite dans le brevet russe publié sous le numéro SU 1.675.244, comprenant de l'acide fluorhydrique, du bifluorure d'ammonium, du fluorosilicate de sodium, du fluorosilicate de potassium et de l'eau. L'association du bifluorure d'ammonium et de l'acide fluorhydrique permet d'améliorer à la fois l'efficacité de l'attaque chimique et l'aspect du verre dépoli obtenu. Par contre, elle induit aussi la formation d'ammoniaque ce qui, pour répondre aux normes européennes de rejets, rend nécessaire un traitement supplémentaire des effluents industriels, qui est coûteux et difficile à réaliser. Les limites fixées par ces normes varient selon les rivières. On admet cependant, qu'un taux d'ammoniaque inférieur ou égal à 1 mg / dm³, constitue une valeur moyenne acceptable. Or, il a déjà été montré, que le rejet de bains d'attaques acides, induit ponctuellement des concentrations d'ammoniaque dans une rivière jusqu'à 3 à 5 fois la norme maximale autorisée.

Pour remédier à cet inconvénient, on a naturellement cherché à remplacer le bifluorure d'ammonium par le bifluorure de sodium ou le bifluorure de potassium. Comme exemples de compositions sans sel d'ammonium, il y a celle décrite dans la demande de brevet japonais publiée sous le numéro 334.841 / 1995, qui contient de l'acide fluorhydrique, du bifluorure de potassium et de l'eau ou celle décrite dans la demande de brevet brésilien publiée sous le numéro 85 01205, qui contient de l'acide fluorhydrique, du bifluorure de potassium, du fluorure de sodium, de l'acide oxalique, de la glycérine et de la baryte. Cependant ces compositions de polissages sont préparées avec de l'acide fluorhydrique.

Or, l'acide fluorhydrique est dangereux à stocker et à manipuler et il est relativement cher. C'est pourquoi il existe sur le marché, des produits de dépolissage qui contiennent de l'acide chlorhydrique à la place de l'acide fluorhydrique. Cependant, ces formulations contiennent aussi du bifluorure d'ammonium.

Dans la demande de brevet français déposée le 16 décembre 1999 et enregistrée sous le numéro 99 15.887, la demanderesse a décrit et revendiqué une composition caractérisée en ce qu'elle comprend :
(a) - de 20% à 99% en poids, de bifluorure de potassium,
(b) - de 1% à 80% en poids, d'au moins un sel de cation multivalent hydrosoluble,
   et éventuellement un ou plusieurs des composés suivants :
(c) - jusqu'à 15% en poids de bifluorure d'ammonium,
(d) - du bifluorure de sodium, en proportion pondérale inférieure ou égale à celle en bifluorure de potassium, étant entendu que lorsqu'elle comprend à la fois du bifluorure d'ammonium et du bifluorure de sodium, la quantité totale en ces deux bifluorures n'excède jamais celle en bifluorure de potassium,
(e) - de 5% à 60% en poids et plus particulièrement, de 10% à 30% en poids, d'au moins une charge insoluble dans l'eau, choisie par les produits minéraux ou organiques, stables en milieu acide par exemple, la baryte ou sulfate de baryum, le gypse, les fluorures insolubles comme le fluorure de calcium, les fluorosilicates insolubles comme le fluorosilicate de sodium ou le fluorosilicate de calcium, le phosphate de calcium, le sulfate de calcium, les oxydes minéraux, en particulier les oxydes de fer, de zinc ou de titane, les sucres et leurs polymères, tels que la cellulose ou ses dérivés, la lignine, l'amidon, les polymères d'oxyde d'éthylène, les polymères d'oxyde de propylène ou les polymères d'oxyde de butylène de haut poids moléculaire ; les acides gras et leurs dérivés solides à température ambiante, les polymères et résines insolubles de hauts poids moléculaires; et/ou
(f) - de 0,2 % à 6% en poids et plus particulièrement, de 1 % à 2% en poids, d'un ou plusieurs agents tensioactifs stables en milieu acide, tels que par exemple, les alcools gras alcoxylés, les alcools gras phosphatés, les alcools gras alcoxylés phosphatés, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés.

Cette composition peut comprendre plus particulièrement :
- de 1 % à 60% en poids, notamment de 5% à 30% en poids, et plus spécifiquement, de 10% à 25% en poids d'au moins un sel de cation multivalent hydrosoluble. Le sel de cation multivalent hydrosoluble, est généralement un sel de cation divalent ou un sel de cation trivalent et est plus particulièrement, un sel de calcium, un sel de magnésium, un sel de zinc, un sel de fer ou un sel d'aluminium tel que par exemple le chlorure de manganèse, le chlorure de magnésium, le sulfate de magnésium, le chlorure de calcium, le chlorure ferrique, l'alumine ou un mélange de ces composés,
   et/ou
- de 40% à 80% en poids, de bifluorure de potassium.

Cette composition se présente généralement sous la forme d'un mélange de poudres, sous la forme de granulés, sous la forme de pastilles ou sous la forme de galets.

Dans cette même demande de brevet français, déposée le 16 décembre 1999 et enregistrée sous le numéro 99 15.887, la demanderesse a aussi décrit et revendiqué :
- Une solution de dépolissage du verre, caractérisée en ce qu'elle est susceptible d'être obtenue en mélangeant entre 0,1 kg et 5 kg et de préférence entre 0,5 kg et 5 kg de la composition que définie précédemment, par litre d'eau ou par litre d'une solution aqueuse d'un ou plusieurs acides minéraux ou organiques, étant entendu que l'acide minéral éventuellement présent dans ladite solution aqueuse avant le mélange avec ladite composition, n'est pas de l'acide fluorhydrique, et
- Une solution de dépolissage du verre, caractérisée en ce qu'elle est susceptible d'être obtenue en mélangeant simultanément ou successivement, de 0,1 kg à 4,95 kg de bifluorure de potassium et de 0,005 kg à 4 kg, d'au moins un sel de cation multivalent hydrosoluble, par litre d'eau ou par litre d'une solution aqueuse d'un ou plusieurs acides minéraux ou organiques, étant entendu que l'acide minéral éventuellement présent dans ladite solution aqueuse avant le mélange avec ledit bifluorure et ledit sel de cation, n'est pas de l'acide fluorhydrique. Cette dernière solution est obtenue en ajoutant éventuellement aussi du bifluorure de sodium en une quantité par litre d'eau ou de solution acide, inférieure ou égale à celle du bifluorure de potassium ou jusqu'à 0,75 kg et de préférence au plus 0,25 kg de bifluorure d'ammonium ou du bifluorure de sodium et du bifluorure d'ammonium, étant entendu que la quantité totale en ces deux bifluorures, est inférieure ou égale à la quantité de bifluorure de potassium et que la quantité de bifluorure d'ammonium ajoutée par litre d'eau ou par litre de solution acide est inférieure ou égale 0,75 kg et de préférence au plus 0,25 kg,
et/ou en ajoutant éventuellement aussi
de 0,025 kg à 3 kg et plus particulièrement de 0,05 kg à 1,5 kg d'au moins une charge insoluble dans l'eau, telle que celle décrite ci-dessus, et/ou en ajoutant éventuellement aussi
de 10⁻³ kg à 0,3 kg et de préférence de 5.10⁻³ kg à 0,1 kg, d'un ou plusieurs agents tensioactifs stables en milieu acide tels que ceux décrits ci-dessus,

Selon un aspect particulier de cette solution de dépolissage, la proportion en sel de cation multivalent hydrosoluble mélangée, est de 0,005 kg à 3 kg, plus particulièrement de 0,025 kg à 1,5 kg et tout particulièrement de 0,05 kg à 1,25 kg par litre d'eau ou par litre de solution aqueuse acide. Le ou les sels de cations multivalents hydrosolubles utilisés sont les mêmes que ceux décrits pour la composition sèche.

Selon un autre aspect particulier de ces deux solutions de dépolissage, la proportion en sel en bifluorure de potassium mélangé, est de 0,2 kg à 4 kg par litre d'eau ou par litre de solution aqueuse acide.

La solution aqueuse d'un ou plusieurs acides minéraux ou organiques servant de base aux deux solutions de dépolissages décrites ci-dessus, est choisie parmi les solutions aqueuses d'acide chlorhydrique, d'acide sulfurique, d'acide phosphorique, d'acide nitrique, d'acide fluorosulfonique, d'acide citrique, d'acide tartrique, d'acide oxalique, d'acide acétique, d'acide propionique, d'acide succinique ou d'un de leurs mélanges. Il s'agit de préférence d'une solution aqueuse d'acide chlorhydrique.

Ces solutions de dépolissage, peuvent être sous forme d'une pâte non coulante, auquel cas elles comprennent aussi un ou plusieurs agents épaississants ou liants stables aux acides.

Dans la même demande de brevet français déposée le 16 décembre 1999 et enregistrée sous le numéro 99 15.887, la demanderesse a aussi décrit et revendiqué :
- Un procédé de dépolissage du verre, caractérisé en ce que la surface de l'objet en verre est mise en contact pendant environ 0,5 seconde à environ 300 secondes, avec une solution de dépolissage, telle que définie précédemment, puis l'objet est rincé puis séché.

Selon une variante de ce procédé, la séquence de mise en contact puis de rinçage est répétée plusieurs fois, plus particulièrement 2 à 4 fois.

Or la demanderesse a constaté que le rinçage à l'eau, qu'elle soit acide ou basique, de l'objet ayant subit le traitement chimique par les solutions de dépolissages décrites ci-dessus, ne suffisait pas à éliminer la pellicule de fluorosilicate de potassium accrochée sur la surface dudit objet.

C'est pourquoi, l'invention a pour objet, un procédé de dépolissage d'objets en verre, *tel que défini à la revendication 1*.

La mise en oeuvre de l'étape (a) est réalisée par la mise en contact de l'objet à dépolir avec la solution de dépolissage pendant une durée qui dépend de la nature de la solution de dépolissage, de l'effet de surface que l'on souhaite obtenir et de la composition du verre à dépolir.

De façon générale, lorsque la solution de dépolissage est à base de bifluorure de potassium et que le contact est réalisé par immersion de l'objet dans la solution, la durée du contact est comprise entre 0,5 seconde et 300 secondes.

Selon leur taille, le procédé tel que défini précédemment, est mis en oeuvre pour dépolir un ou plusieurs objet.

La mise en oeuvre de l'étape (b) est réalisée par immersion de l'objet à rincer dans la solution saline pendant environ 0,5 seconde à 300 secondes Si nécessaire, la solution est agitée pendant le rinçage.

L'invention a plus particulièrement pour objet, un procédé tel que défini précédemment, dans lequel la solution aqueuse d'un ou plusieurs sels de cations de métaux alcalins ou alcalino-terreux mise en oeuvre à l'étape (b), est choisie parmi les solutions aqueuses de sel de sodium, de sel de lithium, de sel de calcium ou de sel de magnésium ou parmi les solutions aqueuses d'un mélange de ces sels et, tout particulièrement, parmi les solutions aqueuses de chlorure de sodium, de chlorure de magnésium, de chlorure de calcium ou de sulfate de magnésium ou parmi les solutions aqueuses d'un mélange de ces sels.

La concentration en sels de cations de métaux alcalins ou alcalino-terreux contenus dans la solution aqueuse mise en oeuvre à l'étape (b), est en général inférieure à 20% en poids et elle est de préférence comprise entre 5% et 10% en poids.

Selon un mode particulier du procédé tel défini précédemment, la solution aqueuse d'un ou plusieurs sels de cations de métaux alcalins ou alcalino-terreux mise en oeuvre à l'étape (b), est une solution à 10% en poids de chlorure de sodium.

La solution aqueuse d'un ou plusieurs sels de cations de métaux alcalins ou alcalino-terreux mise en oeuvre à l'étape (b), peut comprendre aussi un ou plusieurs agents tensioactifs choisis parmi les alcools gras alcoxylés, les alcools gras phosphatés, les alcools gras alcoxylés phosphatés, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés. Dans ce cas la concentration en agents tensioactifs contenus dans la solution aqueuse mise en oeuvre à l'étape (b), est généralement inférieure à 20% en poids et est de préférence comprise entre 0,5% et 5% en poids. On préfère mettre en oeuvre dans la solution saline, des agents tensioactifs anioniques ou cationiques tels que par exemple, le bromure de lauryl diméthyl benzyl ammonium, commercialisé sous le nom d'Amonyl^{™} BR1244 ou le sulfosuccinate de dioctyle commercialisé sous le nom de Supermontaline^{™} SLT 70,

Selon une première variante du procédé tel que défini précédemment, l'objet ayant subi le traitement de l'étape (a), subit, au cours d'une étape (b₀), un rinçage avec de l'eau, avant de subir le traitement de l'étape (b).

La mise en oeuvre de l'étape (b₀) est réalisée par immersion de l'objet à rincer dans l'eau et si nécessaire agitation du bain de trempage ou par aspersion de l'eau sur l'objet.

L'eau mise en oeuvre à l'étape (b₀) peut contenir aussi entre 0,5% et 5% en poids d'un ou plusieurs agents tensioactifs choisis parmi les alcools gras alcoxylés, les alcools gras phosphatés, les alcools gras alcoxylés phosphatés, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés. On préfère mettre en oeuvre des agents tensioactifs anioniques ou cationiques tels que par exemple. le bromure de lauryl diméthyl benzyl ammonium, commercialisé sous le nom d'Amonyl^{™} BR1244 ou le sulfosuccinate de dioctyle commercialisé sous le nom de Super montaline^{™} SLT 70,

Le procédé ou sa variante tels que définis ci-dessus peuvent comprendre une étape (b₁) de rinçage à l'eau de l'objet ayant subi l'étape (b). Cette étape (b₁) peut être suivie si nécessaire d'une étape (b₂) de rinçage à l'eau déminéralisée. Si nécessaire ou si désiré, l'étape (b) ou les séquences d'étapes (b₀) puis (b), (b) puis (b₁), (b₀) puis (b) puis (b₁), (b) puis (b₁) puis (b₂) ou (b₀) puis (b) puis (b₁) puis (b₂), sont répétées plusieurs fois, plus particulièrement 2 à 4 fois.

Dans le procédé et sa variante tels que décrits précédemment, les objets peuvent être égouttés pendant quelques secondes à l'issue d'une étape donnée, avant de subir l'étape suivante, afin d'améliorer l'efficacité de ladite étape suivante. ,

Le procédé ou sa variante tels que définis ci-dessus peuvent comprendre une étape (b₁) de rinçage à l'eau de l'objet ayant subi l'étape (b). Cette étape (b₁) peut être suivie si nécessaire d'une étape (b₂) de rinçage à l'eau déminéralisée. Si nécessaire ou si désiré, l'étape (b) ou les séquences d'étapes (b₀) puis (b), (b) puis (b₁), (b₀) puis (b) puis (b₁), (b) puis (b₁) puis (b₂) ou (b₀) puis (b) puis (b₁) puis (b₂), sont répétées plusieurs fois, plus particulièrement 2 à 4 fois.

Dans le procédé et sa variante tels que décrits précédemment, les objets peuvent être égouttés pendant quelques secondes à l'issue d'une étape donnée, avant de subir l'étape suivante, afin d'améliorer l'efficacité de ladite étape suivante.

Selon un mode particulier du procédé et de sa variante tel que défini précédemment, les objets en verre ayant subi le traitement de l'étape (a), sont égouttés pendant environ de 10 à 60 secondes avant d'être soumis à la première des étapes de rinçage (b₀) ou (b). Cette étape d'égouttage permet alors de récupérer une quantité non nulle de solution de dépolissage qui peut éventuellement être réutilisée.

Selon un autre mode particulier du procédé et de sa variante tel que défini précédemment, la séquence (a) puis (b), (a) puis (b₀) puis (b), (a) puis (b) puis (b₁), (a) puis (b₀) puis (b) puis (b₁), (a) puis (b) puis (b₁) puis (b₂) ou (a) puis (b₀) puis (b) puis (b₁) puis (b₂), incluant éventuellement une étape d'égouttage intercalées entre une ou plusieurs desdites étapes (a), (b₀), (b), (b₁) et/ou (b₂), est répétée plusieurs fois, plus particulièrement 2 à 4 fois.

Comme solution de dépolissage appropriée à la mise en oeuvre de l'étape (a), il y a par exemple les solutions aqueuses décrites dans la demande de brevet français déposée le 16 décembre 1999 et publiée sous le numéro 2 802 545.

Ces solutions sont décrites ci-dessus, dans le paragraphe exposant l'état de la technique.

Le procédé tel que défini ci-dessus est particulièrement approprié au dépolissage de petits objets en verre, tels que les flacons de parfum, les flocons de liqueurs ou les bouteilles de vins ou d'alcools.

Pour un verre attaqué sur 100% de sa surface, on caractérise l'intensité de l'effet d'opacité obtenu. Selon les bains d'attaque acide utilisés, on obtient des dépolis voilés, translucides ou opaques. Pour quantifier cette opacité, on place une lame du verre dépoli au-dessus d'un caractère typographique de la police de caractère "ARIAL 14", imprimé sur un transparent posé sur une table lumineuse. On observe le caractère typographique à travers une loupe. La lame de verre est progressivement éloignée du caractère typographique et l'on détermine ainsi la distance "d" à partir de laquelle ce caractère n'est plus distinguable. Plus la distance "d" est courte, plus le verre est opaque. Un verre totalement opaque conduit à une valeur de "d" égale à 0. Un verre transparent, non dépoli, conduit à une valeur de "d" infinie.

### B) Essai n° 1

### a) Attaque acide au bifluorure d'ammonium

On immerge pendant une minute, une lame de verre pour microscope optique dans une solution saturée de bifluorure d'ammonium dans de l'acide chlorhydrique à 32% dans l'eau. Après rinçage à l'eau et séchage, on évalue la proportion de surface attaquée, la taille des reliefs est estimée par observation microscopique et la "d" mesurée. On obtient un verre dépoli opaque caractérisé par une faible valeur de "d" ayant en surface des "reliefs" de grande taille et uniformément répartis.

### b) Attaque acide au bifluorure de sodium

En opérant de la manière qu'au paragraphe a), avec une solution saturée de bifluorure de sodium dans de l'acide chlorhydrique à 32%, on obtient un verre incomplètement dépoli et hétérogène. L'essai est refait dans des solutions d'acide sulfurique et d'acide fluorhydrique à 32% mais conduit aussi à des résultats non satisfaisants.

### c) Attaque acide au bifluorure de potassium

En opérant de la manière qu'au paragraphe a), avec une solution saturée de bifluorure de potassium dans de l'acide chlorhydrique à 32% dans l'eau, on obtient un verre complètement dépoli de façon homogène ayant des "reliefs" de petites tailles, n'induisant aucune opacité (valeur de "d" élevée). Le dépoli est d'un aspect "glacé" et inesthétique.

### d) Attaque acide avec des mélanges de bifluorure de potassium et de bifluorure d'ammonium

En opérant de la manière qu'au paragraphe a), avec une solution saturée en mélange de bifluorures de potassium et d'ammonium dans de l'acide chlorhydrique concentré, on obtient des verres dépolis plutôt translucides, dont l'opacité n'augmente pas de manière régulière avec la concentration en bifluorure d'ammonium.

Les résultats des essais 1 a) à 1 d), sont rassemblés dans le tableau suivant:

**Tableau 1:**

| Bifluorures mis en oeuvre | Solution aqueuse acide | Surface attaquée (en %) | Taille des reliefs (en µm) maxi / mini | "d" (en mm) |
|---|---|---|---|---|
| NH₄, HF₂ | HCI 32% | 100 | 40 / 2 | 9 |
| NaHF₂ | HCl 32% | 9 | 5/0,5 | nd |
| NaHF₂ | HF 32% | 10 | 13/0,5 | nd |
| NaHF₂ | H₂SO₄ 32% | 50 | 15/2 | nd |
| KHF₂ | HCl 32% | 100 | 5/1 | >130 |
| KHF₂+NH₄, HF₂ 50% / 50% | HCl 32% | 100 | 40/2 | >130 |
| KHF₂+NH₄HF₂ 70% / 30% | HCl 32% | 100 | 40 / 2 | 24 |
| KHF₂+NH₄, HF₂ 85%/15% | HCl 32% | 100 | 40 / 2 | 24 |

Cet essai démontre que le remplacement d'un bifluorure par un autre conduit à des résultats non prévisibles.

### C) Essai n° 2

En opérant de la manière qu'au paragraphe B a), avec différentes solutions saturées de bifluorure de potassium dans de l'acide chlorhydrique à 32% et contenant différents sels, on obtient les résultats rassemblés dans le tableau suivant :

**Tableau 2:**

| Sel | Concentration du sel (% en poids) | Taille des reliefs (en µm) maxi / mini | d (en mm) |
|---|---|---|---|
| Aucun | 0 | 15 / 2,5 | >130 |
| NaCl | 1 | 18 / 2,5 | >130 |
| NaCl | 5 | 15 / 2,5 | >130 |
| Na₂SO₄ | 1 à 5 | 15 / 2,5 | >130 |
| Na₂SO₄ | 10 | 10/2,5 | >130 |
| KCI | 1 | 22/2,5 | >130 |
| KCI | 5 | 22/2,5 | >130 |
| K₂SiF₆ | 1 | 22 / 2,5 | >130 |
| K₂SiF₆ | 5 | 22 / 2,5 | >130 |
| K₂SO₄ | 5 | 22 / 2,5 | >130 |
| LiCl | 1 | 22/2,5 | >130 |
| MnCl₂ | 5 | 38 / 5 | 130 |
| CaCl₂ | 5 | 30/5 | 130 |
| CaCl₂ | 20 | 38 / 5 | 12 |
| MgCl₂ | 5 | 30/8 | 50 |
| MgCl₂ | 10 | 50/8 | 20 |
| MgCl₂ | 20 | 60/8 | 14 |
| FeCl₃ | 1 | 38/2,5 | 130 |
| FeCl₃ | 3 | 25/5 | 70 |
| FeCl₃ | 5 | 13 / 2,5 | 65 |
| FeCl₃ | 10 | 5/2,5 | 65 |
| Al₂O₃ | 5 | 35/5 | 35 |

Ces résultats font apparaître que, de manière tout à fait inattendue, la présence de sels solubles de cations multivalents, en particulier de cations divalents ou trivalents, dans les bains acides de dépolissage, induit la formations de reliefs de plus grandes tailles et permet d'aboutir à des dépolis d'opacité et d'aspect macroscopique, très voisins de ceux obtenus avec des solutions de bifluorure d'ammonium dans l'acide chlorhydrique ou encore avec des solutions d'acide fluorhydrique. Par contre, la présence de sels de cations monovalents n'apporte pas cet avantage. On peut notamment donc remplacer avantageusement les bains de dépolissage à base d'acide fluorhydrique et ou de bifluorure d'ammonium par des bains à base d'acide chlorhydrique, de bifluorure de potassium et de sels solubles de cations multivalents.

### D) Exemples de compositions

### a) Compositions témoins

On prépare une première solution témoin (composition **T₁**), constituée de 100 g de bifluorure de potassium dans 66 ml d'acide chlorhydrique à 32% dans l'eau.

On prépare une seconde composition témoin (composition **T₂**), constituée par 100 g de LERITE^{™} SX13, qui est une composition commerciale sous forme de poudre vendue par la société SEPPIC et dont le composant principal est du bifluorure d'ammonium, dans 40 ml d'acide chlorhydrique à 32%.

### b) Exemple 1

On prépare une composition **A** sans ammonium, en dispersant 100g de bifluorure de potassium dans 66 ml d'acide chlorhydrique à 32%. et en ajoutant dans le mélange résultant, 10 g de chlorure de magnésium (MgCl₂, 4,5 H₂O).

On prépare une composition **B** sans ammonium, en dispersant 100g de bifluorure de potassium dans 66 ml d'acide chlorhydrique à 32%. et en ajoutant dans le mélange résultant, 10 g de sulfate de calcium.

Dans chacune de ces compositions on trempe des lames de verre sodo-calcique, pendant 1 minute, on les laisse s'égoutter 15 secondes, on les rince selon la méthode suivante :.
- Une première étape de rinçage par immersion pendant quelques secondes dans un bain d'eau froide,
- Une deuxième étape de rinçage par immersion pendant quelques secondes dans une solution aqueuse à 10% an poids de chlorure de sodium,
- Une troisième étape de rinçage par immersion pendant quelques secondes dans un bain d'eau froide.

Puis on termine l'opération en séchant les lames ainsi dépolies.

Les lames de verre attaquées par les compositions **A** et **B** ont un aspect dépoli homogène et opaque, équivalent à celui de la composition existante témoin **T₂** et beaucoup moins translucide que celui obtenu avec la composition témoin **T₁** sans sel de cation divalent.

### c) Exemple 2

On prépare par un mélange de poudres contenant 78 g de bifluorure de potassium et 22g de sulfate de magnésium. Ce mélange de poudres s'écoule librement et ne motte pas au stockage dans le temps. On disperse ce mélange dans 51 ml d'acide chlorhydrique à 32% (composition **D**).

On prépare par un mélange de poudres contenant 78 g de bifluorure de potassium et 22g de chlorure de calcium puis on disperse ce mélange dans 51ml d'acide chlorhydrique 32% (composition **E**).

On dépolit des lames de verre dans chacune des compositions D et E, comme décrit à l'exemple 1, mais en remplaçant dans la deuxième étape de rinçage la solution aqueuse à 10% en poids de chlorure de sodium par une solution aqueuse comprenant 5% en poids de chlorure de sodium et 5% en poids de sulfate de magnésium. Les lames de verre attaquées par les compositions **D** et **E** ont un aspect dépoli homogène opaque, voisin dans le cas la composition D, de celui induit par la composition témoin **T₂**, un peu moins opaque dans le cas de la composition E.

### d) Exemple 3:

On prépare un mélange de poudres contenant 84 g de bifluorure de potassium et 16 g de différents sels de cations di ou trivalents. Ces mélanges de poudres s'écoulent librement et ne mottent pas au stockage dans le temps. Puis on disperse chacun de ces mélanges dans 55 ml d'acide chlorhydrique à 32%. On réalise alors le dépolissage de lames de verre comme indiqué à l'exemple 1. Les lames de verre attaquées par les différentes compositions, ont un aspect dépoli homogène et une opacité nettement améliorée par rapport à ceux obtenus avec la composition témoin T₁ sans sel.

### e) Exemple 4

On prépare un mélange de poudres contenant en poids 65% de bifluorure de potassium, 20% de sulfate de magnésium et 15% de baryte comme charge minérale insoluble. Ce mélange de poudres s'écoule facilement et ne motte pas lors du stockage. Il est dispersé dans de l'acide chlorhydrique à 32%; à raison de 100 kg de poudre pour 43 litres d'acide.

Le bain acide ainsi formé (composition **K**) est fluide et peut être maintenu agité sans problème avec un agitateur classique. Sa densité est égale à 1,68.

On réalise avec cette composition, le dépolissage de lames de verre ainsi que celui de flacons de parfums, selon le protocole décrit à l'exemple 2. Les lames et les flacons présentent un dépoli uniforme, très esthétique, d'opacité et de brillance équivalentes à celles obtenues sur les mêmes objets en verre avec la composition témoin T₂. La valeur d, mesurée pour les lames de verre est égale à 9.

### f) Exemple 5

On prépare un mélange de poudres identique à celui de l'exemple 4, auquel on ajoute un agent tensioactif fluoré, le BAYOWET^{™} FT 248, commercialisé par la société Bayer, dans la proportion de 0,4 kg d'agent tensioactif pour 100 kg de poudres. On obtient un mélange sec qui s'écoule librement et qui est dispersé dans de l'acide chlorhydrique à 32%, dans les mêmes proportions que celles indiquées à l'exemple 4. Le bain acide obtenu (composition **L**), est très fluide.

Environ 10 ml de ce bain sont injectés dans le culot d'ampoules électriques pendant un temps de l'ordre de 3 secondes, puis les ampoules électriques sont égouttées. On recommence cette séquence encore deux fois, puis on rince comme décrit à l'exemple 1 et l'on sèche. L'aspect des ampoules dépolies est identique à celui d'ampoules traitées de la même manière par un bain de LERITE^{™} SX 13 (composition T₂).

### g) Exemple 6

On prépare un mélange de poudres constitué de 40% de bifluorure de potassium, 25% de bifluorure de sodium, 20% de sulfate de magnésium, 15% de baryte et 0,5% de BAYOWET^{™} FT 248. On disperse ensuite ce mélange dans de l'acide chlorhydrique comme à l'exemple 4 et forme ainsi la composition M. On procède au dépolissage de flacons de parfum comme à l'exemple 4. L'aspect du dépoli est identique à celui obtenu avec la composition L de l'exemple 4 ou avec la composition T₂.

### h) Exemple 7 : Compositions appauvries en ammonium

On prépare des mélanges de poudres contenant 65% d'un mélange de bifluorure de potassium et de bifluorure d'ammonium, en différentes proportions, 20% de sulfate de magnésium et 15% de baryte. 1000 g de ces compositions sont versés dans 430 ml d'acide chlorhydrique à 32% puis on réalise le dépolissage de lames de verre comme à l'exemple 4. On remarque que :
- Les lames dépolies avec la composition N contenant 10% de bifluorure d'ammonium ont une valeur d de 12 mm, proche de celle obtenue avec la composition K qui ne contient pas de bifluorure d'ammonium.
- Les lames dépolies avec les compositions O ou P contenant 20 et 30% de bifluorure d'ammonium sont moins opaques.

### i) Exemple 8 : Dépolissage dans différents acides

On reprend le mélange de poudres décrit à l'exemple 4. On verse 1000g de ce mélange dans 430 ml de différents acides à 32% dans l'eau, puis on dépolit des flacons de parfums avec les bains acides formés. Les acides utilisés sont l'acide chlorhydrique, l'acide sulfurique, l'acide nitrique, l'acide phosphorique, l'acide oxalique et l'acide citrique.

Dans tous les cas, on obtient de flacons avec un dépoli uniforme. L'opacité du flacon dépoli dans le bain d'acide chlorhydrique est équivalente à celle d'un flacon dépoli dans la composition T₂. Les flacons dépolis dans les autres acides sont légèrement moins opaques et l'opacité décroît dans l'ordre : Acide sulfurique, acide nitrique, acide phosphorique, acide citrique et acide oxalique.

### i) Exemple 9 : Procédés de dépolissage

On reprend le mélange de poudres décrit à l'exemple 4. 1000 g de ce mélange sont mélangés à 430 ml d'une solution contenant de l'eau ou de l'acide chlorhydrique à différentes concentrations dans l'eau. On dépolit des lames de verre selon le protocole de l'exemple 1 et on mesure la valeur d. Après un cycle de dépolissage, seuls les bains contenant de l'acide chlorhydrique à la concentration d'au moins 20%, induisent une bonne opacité. On met ensuite en oeuvre un protocole de dépolissage à deux cycles : trempage de 15 secondes, égouttage de 15 secondes, rinçage selon la méthode décrite à l'exemple 1, puis séchage à l'air; puis on recommence ces 4 opérations. On obtient des dépolis tout à fait satisfaisants avec le mélange de poudres selon l'invention pour tous les bains, même celui sans acide, alors qu'aucun dépoli satisfaisant n'est obtenu avec ce procédé si on utilise la composition LERITE^{™} SX13.

## Revendications

1. Procédé de dépolissage d'objets en verre par traitement chimique, **caractérisé en ce qu'**il comprend :
(a) au moins une étape de traitement chimique desdits objets avec une solution de dépolissage chimique obtenue en mélangeant :
entre 0,1 kg et 5 kg et de préférence entre 0,5 kg et 5 kg d'une composition comprenant :
- de 20% à 99% en poids, et plus particulièrement de 40% à 80% en poids de bifluorure de potassium;
- de 1 % à 80% en poids, plus particulièrement de 1 % à 60% en poids, notamment de 5% à 30% en poids, et plus spécifiquement, de 10% à 25% en poids d'au moins un sel de cation multivalent hydrosoluble choisi parmi les sels de cations divalents ou trivalents et plus particulièrement parmi les sels de calcium, de magnésium, de zinc, de fer ou d'aluminium et tout particulièrement parmi le chlorure de manganèse, le chlorure de magnésium, le sulfate de magnésium, le chlorure de calcium, le chlorure ferrique, l'alumine ou un mélange de ces composés;
et éventuellement un ou plusieurs des composés suivants :
- jusqu'à 15% en poids de bifluorure d'ammonium,
- du bifluorure de sodium, en proportion pondérale inférieure ou égale à celle en bifluorure de potassium, étant entendu que lorsqu'elle comprend à la fois du bifluorure d'ammonium et du bifluorure de sodium, la quantité totale en ces deux bifluorures n'excède jamais celle en bifluorure de potassium,
- de 5% à 60% en poids et plus particulièrement, de 10% à 30% en poids, d'au moins une charge insoluble dans l'eau, choisie par les produits minéraux ou organiques, stables en milieu acide par exemple, la baryte ou sulfate de baryum, le gypse, les fluorures insolubles comme le fluorure de calcium, les fluorosilicates insolubles comme le fluorosilicate de sodium ou le fluorosilicate de calcium, le phosphate de calcium, le sulfate de calcium, les oxydes minéraux, en particulier les oxydes de fer, de zinc ou de titane, les sucres et leurs polymères, tels que la cellulose ou ses dérivés, la lignine, l'amidon, les polymères d'oxyde d'éthylène, les polymères d'oxyde de propylène ou les polymères d'oxyde de butylène de haut poids moléculaire ; les acides gras et leurs dérivés solides à température ambiante, les polymères et résines insolubles de hauts poids moléculaires; et/ou
- de 0,2 % à 6% en poids et plus particulièrement, de 1% à 2% en poids, d'un ou plusieurs agents tensioactifs stables en milieu acide, tels que par exemple, les alcools gras alcoxylés, les alcools gras phosphatés, les alcools gras alcoxylés phosphatés, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés
par litre d'eau ou par litre d'une solution aqueuse d'un ou plusieurs acides minéraux ou organiques, étant entendu que l'acide minéral éventuellement présent dans ladite solution aqueuse avant le mélange avec ladite composition, n'est pas de l'acide fluorhydrique, et de préférence par litre de solution aqueuse d'acide chlorhydrique et
(b) au moins une étape de rinçage des objets dépolis par le traitement de l'étape (a), avec une solution aqueuse d'un ou plusieurs sels de cations de métaux alcalins ou alcalino-terreux.

2. Procédé tel que défini à la revendication 1, selon lequel la solution aqueuse d'un ou plusieurs sels de cations de métaux alcalins ou alcalino-terreux mise en oeuvre à l'étape (b), est choisie parmi les solutions aqueuses de sel de sodium, de sel de lithium, de sel de calcium ou de sel de magnésium ou parmi les solutions aqueuses d'un mélange de ces sels.

3. Procédé tel que défini à la revendication 2, selon lequel la solution aqueuse d'un ou plusieurs sels de cations de métaux alcalins ou alcalino-terreux mise en oeuvre à l'étape (b), est choisie parmi les solutions aqueuses de chlorure de sodium, de chlorure de magnésium, de chlorure de calcium ou de sulfate de magnésium ou parmi les solutions aqueuses d'un mélange de ces sels.

4. Procédé tel que défini à l'une des revendications 1 à 3, selon lequel la concentration en sels de cations de métaux alcalins ou alcalino-terreux contenus dans la solution aqueuse mise en oeuvre à l'étape (b), est inférieure à 20% en poids et est de préférence comprise entre 5% et 10% en poids.

5. Procédé tel que défini à l'une des revendications 1 à 4, selon lequel la solution aqueuse d'un ou plusieurs sels de cations de métaux alcalins ou alcalino-terreux mise en oeuvre à l'étape (b), est une solution à 10% en poids de chlorure de sodium.

6. Procédé tel que défini à l'une des revendications 1 à 5, selon lequel la La solution aqueuse d'un ou plusieurs sels de cations de métaux alcalins ou alcalino-terreux mise en oeuvre à l'étape (b), comprend aussi un ou plusieurs agents tensioactifs choisis parmi les alcools gras alcoxylés, les alcools gras phosphatés, les alcools gras alcoxylés phosphatés, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés.

7. Procédé tel que défini à la revendication 6, selon lequel la concentration en agents tensioactifs contenus dans la solution aqueuse mise en oeuvre à l'étape (b), est inférieure à 20% en poids et est de préférence comprise entre 0,5% et 5% en poids.

8. Procédé tel que défini à l'une des revendications 6 ou 7, selon lequel les agents tensioactifs contenus dans la solution mise en oeuvre à l'étape (b), sont de nature anionique ou cationique et sont de préférence choisis parmi le bromure de lauryl diméthyl benzyl ammonium ou le sulfosuccinate de dioctyle.

9. Procédé tel que défini à l'une des revendications 1 à 8, comprenant en outre une étape (b₁) de rinçage à l'eau de l'objet ayant subi l'étape (b).

10. Procédé tel que défini à la revendication 9, comprenant en outre une étape (b₂) de rinçage à l'eau déminéralisée postérieure à étape (b₁).

11. Procédé tel que défini à l'une des revendications 1 à 10, **caractérisé en ce que** les objets en verre ayant subi le traitement de l'étape (a), sont égouttés pendant environ de 10 à 60 secondes avant d'être soumis à l'étape de rinçage (b).

12. Procédé tel que défini à l'une des revendications 1 à 11 selon lequel l'étape (b) ou la séquence d'étapes, (b) puis (b₁) ou (b) puis (b₁) puis (b₂), est répétée plusieurs fois, plus particulièrement 2 à 4 fois.

13. Procédé tel que défini à l'une des revendications 1 à 12, selon lequel la séquence d'étapes (a) puis (b), (a) puis (b) puis (b₁) ou (a) puis (b) puis (b₁) puis (b₂), incluant éventuellement une étape d'égouttage intercalée entre les étapes (a) et (b) est répétée plusieurs fois, plus particulièrement 2 à 4 fois.

14. Procédé tel que défini à l'une des revendications 10 à 13, comprenant une étape de séchage de l'objet, postérieure à l'étape (b₂)

15. Variante du procédé tel que défini à l'une des revendications 1 à 14, selon laquelle, les objets ayant subi le traitement de l'étape (a), subissent, au cours d'une étape (b₀), un rinçage avec de l'eau, avant de subir le traitement de l'étape (b).

16. Variante du procédé telle que définie à la revendication 15, selon laquelle l'eau mise en oeuvre à l'étape (b₀) contient entre 0,5% et 5% en poids d'un ou plusieurs agents tensioactifs choisis parmi les alcools gras alcoxylés, les alcools gras phosphatés, les alcools gras alcoxylés phosphatés, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés.

17. Variante du procédé telle que définie à la revendication 16, selon laquelle l'eau mise en oeuvre à l'étape (b₀) contient entre 0,5% et 5% en poids d'un ou plusieurs agents tensioactifs choisis parmi les agents tensioactifs anioniques ou cationiques.

18. Variante du procédé telle que définie à la revendication 17, selon laquelle l'eau mise en oeuvre à l'étape (b₀) contient entre 0,5% et 5% en poids d'un ou plusieurs agents tensioactifs choisis parmi le bromure de lauryl diméthyl benzyl ammonium ou le sulfosuccinate de dioctyle.

19. Procédé ou sa variante tels que définis à la revendication 18, pour lesquels la proportion en sel de bifluorure de potassium mélangé est de 0,2 kg à 4 kg par litre d'eau ou par litre de solution aqueuse acide.

## Claims

1. Method of frosting glass objects by chemical treatment, **characterized in that** it comprises:
(a) at least one step of chemically treating said objects with a chemical frosting solution obtained by mixing:
between 0.1 kg and 5 kg per litre of water, and preferably between 0.5 kg and 5 kg of a composition comprising:
- from 20% to 99% by weight, and more particularly from 40% to 80% by weight of potassium bifluoride;
- from 1% to 80% by weight, more particularly from 1% to 60% by weight, especially from 5% to 30% by weight, and more specifically from 10% to 25% by weight of at least one water-soluble multivalent cation salt chosen from the salts of divalent or trivalent cations and more particularly from the salts of calcium, magnesium, zinc, iron or aluminium and most particularly from manganese chloride, magnesium chloride, magnesium sulphate, calcium chloride, ferric chloride, alumina or a mixture of these compounds;
and optionally one or more of the following compounds:
- up to 15% by weight of ammonium bifluoride;
- sodium bifluoride, in a proportion by weight less than or equal to that of potassium bifluoride, it being understood that when it comprises both ammonium bifluoride and sodium bifluoride, the total amount of these two bifluorides never exceeds that of potassium bifluoride;
- from 5% to 60% by weight and more particularly from 10% to 30% by weight of at least one water-insoluble filler, chosen from mineral or organic products that are stable in acid medium, for example barite or barium sulphate, gypsum, insoluble fluorides such as calcium fluoride, insoluble fluorosilicates such as sodium fluorosilicate or calcium fluorosilicate, calcium phosphate, calcium sulphate, mineral oxides, in particular iron, zinc or titanium oxides, sugars and polymers thereof, such as cellulose or derivatives thereof, lignin, starch, ethylene oxide polymers, propylene oxide polymers or butylene oxide polymers of high molecular weight; fatty acids and derivatives thereof that are solid at ambient temperature, and insoluble polymers and resins of high molecular weight; and/or
- from 0.2% to 6% by weight and more particularly from 1% to 2% by weight of one or more surfactants that are stable in acid medium, such as for example, alkoxylated fatty alcohols, phosphated fatty alcohols, phosphated alkoxylated fatty alcohols, ethylene oxide/propylene oxide copolymers, fatty amides or cationic surfactants or fluoro derivatives of said surfactants, and silicone or fluorosilicone surfactants;
per litre of water or per litre of an aqueous solution of one or more mineral or organic acids, it being understood that the mineral acid optionally present in said aqueous solution before the mixing with said composition is not hydrofluoric acid, and preferably per litre of aqueous solution of hydrochloric acid; and
(b) at least one step of rinsing the objects frosted by the treatment of step (a) with an aqueous solution of one or more salts of alkali or alkaline-earth metal cations.

2. Process as defined in Claim 1, according to which the aqueous solution of one or more salts of alkali or alkaline-earth metal cations used in step (b) is chosen from aqueous solutions of sodium salts, lithium salts, calcium salts or magnesium salts or from aqueous solutions of a mixture of these salts.

3. Process as defined in Claim 2, according to which the aqueous solution of one or more salts of alkali or alkaline-earth metal cations used in step (b) is chosen from the aqueous solutions of sodium chloride, magnesium chloride, calcium chloride or magnesium sulphate or from the aqueous solutions of a mixture of these salts.

4. Process as defined in one of Claims 1 to 3, according to which the concentration of salts of alkali or alkaline-earth metal cations contained in the aqueous solution used in step (b) is less than 20% by weight and is preferably between 5% and 10% by weight.

5. Process as defined in one of Claims 1 to 4, according to which the aqueous solution of one or more salts of alkali or alkaline-earth metal cations used in step (b) is a solution containing 10% by weight of sodium chloride.

6. Process as defined in one of Claims 1 to 5, according to which the aqueous solution of one or more salts of alkali or alkaline-earth metal cations used in step (b) also comprises one or more surfactants chosen from alkoxylated fatty alcohols, phosphated fatty alcohols, phosphated alkoxylated fatty alcohols, ethylene oxide/propylene oxide copolymers, fatty amides or cationic surfactants or fluoro derivatives of said surfactants, and silicone or fluorosilicone surfactants.

7. Process as defined in Claim 6, according to which the concentration of surfactants contained in the aqueous solution used in step (b) is less than 20% by weight and is preferably between 0.5% and 5% by weight.

8. Process as defined in either of Claims 6 and 7, according to which the surfactants contained in the solution used in step (b) are of anionic or cationic nature and are preferably chosen from lauryldimethylbenzylammonium bromide or dioctyl sulphosuccinate.

9. Process as defined in one of Claims 1 to 8, comprising, in addition, a step (b₁) of rinsing the object that has undergone step (b) with water.

10. Process as defined in Claim 9, comprising, in addition, a step (b₂) of rinsing with demineralized water after step (b₁).

11. Process as defined in one of Claims 1 to 10, **characterized in that** the glass objects that have undergone the treatment from step (a) are drained for around 10 to 60 seconds before being subjected to the rinsing step (b).

12. Process as defined in one of Claims 1 to 11, according to which the step (b) or the sequence of steps (b) then (b₁) or (b) then (b₁) then (b₂), is repeated several times, more particularly 2 to 4 times.

13. Process as defined in one of Claims 1 to 12, according to which the sequence of steps (a) then (b), (a) then (b) then (b₁) or (a) then (b) then (b₁) then (b₂), optionally including a draining step inserted between steps (a) and (b), is repeated several times, more particularly 2 to 4 times.

14. Process as defined in one of Claims 10 to 13, comprising a step of drying the object, after step (b₂).

15. Variant of the process as defined in one of Claims 1 to 14, according to which the objects that have undergone the treatment from step (a) undergo, during a step (b₀), a rinsing with water before undergoing the treatment from step (b).

16. Variant of the profess as defined in Claim 15, according to which the water used in step (b₀) contains between 0.5% and 5% by weight of one or more surfactants chosen from alkoxylated fatty alcohols, phosphated fatty alcohols, phosphated alkoxylated fatty alcohols, ethylene oxide/propylene oxide copolymers, fatty amides or cationic surfactants or fluoro derivatives of said surfactants, and silicone or fluorosilicone surfactants.

17. Variant of the process as defined in Claim 16, according to which the water used in step (b₀) contains between 0.5% and 5% by weight of one or more surfactants chosen from anionic or cationic surfactants.

18. Variant of the process as defined in Claim 17, according to which the water used in step (b₀) contains between 0.5% and 5% by weight of one or more surfactants chosen from lauryldimethylbenzylammonium bromide or dioctyl sulphosuccinate.

19. Process or its variant as defined in Claim 18, for which the proportion of potassium bifluoride salt mixed is from 0.2 kg to 4 kg per litre of water or per litre of acidic aqueous solution.

## Patentansprüche

1. Verfahren zum Mattieren von Glasgegenständen durch chemische Behandlung, **dadurch gekennzeichnet, daß** es folgendes umfaßt:
(a) mindestens einen Schritt der chemischen Behandlung der Gegenstände mit einer durch Mischen von:
zwischen 0,1 kg und 5 kg und vorzugsweise zwischen 0,5 und 5 kg einer Zusammensetzung, enthaltend:
- 20 bis 99 Gew.-% und spezieller 40 bis 80 Gew.-% Kaliumbifluorid;
- 1 bis 80 Gew.-%, spezieller 1 bis 60 Gew.-%, insbesondere 5 bis 30 Gew.-% und spezifischer 10 bis 25 Gew.-% mindestens eines wasserlöslichen Salzes eines mehrwertigen Kations, das unter Salzen von zwei- oder dreiwertigen Kationen und spezieller unter Calcium-, Magnesium-, Zink-, Eisen- oder Aluminiumsalzen und ganz speziell unter Manganchlorid, Magnesiumchlorid, Magnesiumsulfat, Calciumchlorid, Eisen(III)-chlorid, Aluminiumoxid oder einem Gemisch dieser Verbindungen ausgewählt ist;
und gegebenenfalls einer oder mehrerer der folgenden Verbindungen:
- bis zu 15 Gew.-% Ammoniumbifluorid,
- Natriumbifluorid in einem Gewichtsanteil, der kleiner oder gleich dem Gewichtsanteil an Kaliumbifluorid ist, mit der Maßgabe, daß dann, wenn die Lösung sowohl Ammoniumbifluorid als auch Natriumbifluorid enthält, die Gesamtmenge dieser beiden Bifluoride nie über die Menge an Kaliumbifluorid hinausgeht,
- 5 bis 60 Gew.-% und spezieller 10 bis 30 Gew.-% mindestens eines wasserunlöslichen Füllstoffs, der unter in saurem Milieu stabilen anorganischen oder organischen Produkten ausgewählt ist, beispielsweise Baryt bzw. Bariumsulfat, Gips, unlösliche Fluoride wie Calciumfluorid, unlösliche Fluorosilicate wie Natriumfluorosilicat oder Calciumfluorosilicat, Calciumphosphat, Calciumsulfat, anorganische Oxide, insbesondere Eisen-, Zink- oder Titanoxide, Zucker und Polymere davon, wie Cellulose und Derivate davon, Lignin, Stärke, Ethylenoxidpolymere, Propylenoxidpolymere oder Butylenoxidpolymere mit hohem Molekulargewicht, Fettsäuren und Derivate davon, die bei Umgebungstemperatur fest sind, und unlösliche Polymere und Harze mit hohem Molekulargewicht;
und/oder
- 0,2 bis 6 Gew.-% und spezieller 1 bis 2 Gew.-% eines oder mehrerer in saurem Milieu stabiler Tenside, wie beispielsweise alkoxylierte Fettalkohole, phosphatierte Fettalkohole, phosphatierte alkoxylierte Fettalkohole, Ethylenoxid/Propylenoxid-Copolymere, Fettsäureamide oder kationische Tenside oder fluorierte Derivate dieser Tenside und Silikon- oder Fluorsilikontenside;
pro Liter Wasser oder pro Liter einer wäßrigen Lösung einer oder mehrerer anorganischer oder organischer Säuren, mit der Maßgabe, daß es sich bei der in der wäßrigen Lösung vor dem Mischen mit der Zusammensetzung gegebenenfalls vorhandenen anorganischen Säure nicht um Flußsäure handelt, und vorzugsweise pro Liter wäßrige Salzsäurelösung,
erhaltenen Lösung zur chemischen Mattierung und
(b) mindestens einen Schritt des Abspülens der durch die Behandlung in Schritt (a) mattierten Gegenstände mit einer wäßrigen Lösung eines oder mehrerer Salze von Alkalimetall- oder Erdalkalimetallkationen.

2. Verfahren nach Anspruch 1, bei dem man die in Schritt (b) eingesetzte wäßrige Lösung eines oder mehrerer Salze von Alkalimetall- oder Erdalkalimetallkationen unter wäßrigen Lösungen von Natriumsalz, Lithiumsalz, Calciumsalz oder Magnesiumsalz oder unter wäßrigen Lösungen eines Gemischs dieser Salze auswählt.

3. Verfahren nach Anspruch 2, bei dem man die in Schritt (b) eingesetzte wäßrige Lösung eines oder mehrerer Salze von Alkalimetall- oder Erdalkalimetallkationen unter wäßrigen Lösungen von Natriumchlorid, Magnesiumchlorid, Calciumchlorid oder Magnesiumsulfat oder unter wäßrigen Lösungen eines Gemischs dieser Salze auswählt.

4. Verfahren nach einem der Ansprüche 1 bis 3, bei dem die Konzentration an Salzen von Alkalimetall- oder Erdalkalimetallkationen, die in der in Schritt (b) eingesetzten wäßrigen Lösung enthalten sind, unter 20 Gew.-% und vorzugsweise zwischen 5 und 10 Gew.-% liegt.

5. Verfahren nach einem der Ansprüche 1 bis 4, bei dem es sich bei der in Schritt (b) eingesetzten wäßrigen Lösung eines oder mehrerer Salze von Alkalimetall- oder Erdalkalimetallkationen um eine 10 gew.-%ige Lösung von Natriumchlorid handelt.

6. Verfahren nach einem der Ansprüche 1 bis 5, bei dem die in Schritt (b) eingesetzte wäßrige Lösung eines oder mehrerer Salze von Alkalimetall- oder Erdalkalimetallkationen außerdem ein oder mehrere unter alkoxylierten Fettalkoholen, phosphatierten Fettalkoholen, phosphatierten alkoxylierten Fettalkoholen, Ethylenoxid/Propylenoxid-Copolymeren, Fettsäureamiden oder kationischen Tensiden oder fluorierten Derivaten dieser Tenside und Silikon- oder Fluorsilikontensiden ausgewählte Tenside enthält.

7. Verfahren nach Anspruch 6, bei dem die Konzentration an Tensiden, die in der in Schritt (b) eingesetzten wäßrigen Lösung enthalten sind, unter 20 Gew.-% und vorzugsweise zwischen 0,5 und 5 Gew.-% liegt.

8. Verfahren nach Anspruch 6 oder 7, bei dem die Tenside, die in der in Schritt (b) eingesetzten Lösung enthalten sind, anionischer oder kationischer Natur sind und vorzugsweise unter Lauryldimethylbenzylammoniumbromid oder Dioctylsulfosuccinat ausgewählt werden.

9. Verfahren nach einem der Ansprüche 1 bis 8, das außerdem einen Schritt (b₁) des Abspülens des dem Schritt (b) unterworfenen Gegenstands mit Wasser umfaßt.

10. Verfahren nach Anspruch 9, das außerdem einen Schritt (b₂) des Spülens mit vollentsalztem Wasser nach Schritt (b₁) umfaßt.

11. Verfahren nach einem der Ansprüche 1 bis 10, **dadurch gekennzeichnet, daß** man die der Behandlung in Schritt (a) unterworfenen Glasgegenstände ungefähr 10 bis 60 Sekunden abtropfen läßt, bevor man sie dem Abspülschritt (b) unterwirft.

12. Verfahren nach einem der Ansprüche 1 bis 11, bei dem man Schritt (b) oder die Abfolge der Schritte (b) und dann (b₁) oder (b), dann (b₁) und dann (b₂) mehrmals, spezieller 2- bis 4mal, wiederholt.

13. Verfahren nach einem der Ansprüche 1 bis 12, bei dem man die Abfolge der Schritte (a) und dann (b) oder (a), dann (b) und dann (bis) oder (a), dann (b), dann (b₁) und dann (b₂) einschließlich eines zwischengeschalteten Abtropfschritts zwischen den Schritten (a) und (b) mehrmals, spezieller 2- bis 4mal, wiederholt.

14. Verfahren nach einem der Ansprüche 10 bis 13, das einen Schritt des Trocknens des Gegenstands nach Schritt (b₂) umfaßt.

15. Variante des Verfahrens nach einem der Ansprüche 1 bis 14, bei dem man die Gegenstände nach der Behandlung in Schritt (a) im Lauf eines Schritts (b₀) einer Abspülung mit Wasser unterwirft, bevor man sie der Behandlung in Schritt (b) unterwirft.

16. Variante des Verfahrens nach Anspruch 15, bei dem das in Schritt (b₀) eingesetzte Wasser zwischen 0,5 und 5 Gew.-% eines oder mehrerer unter alkoxylierten Fettalkoholen, phosphatierten Fettalkoholen, phosphatierten alkoxylierten Fettalkoholen, Ethylenoxid/Propylenoxid-Copolymeren, Fettsäureamiden oder kationischen Tensiden oder fluorierten Derivaten dieser Tenside und Silikon- oder Fluorsilikontensiden ausgewählter Tenside enthält.

17. Variante des Verfahrens nach Anspruch 16, bei dem das in Schritt (b₀) eingesetzte Wasser zwischen 0,5 und 5 Gew.-% eines oder mehrerer unter anionischen oder kationischen Tensiden ausgewählter Tenside enthält.

18. Variante des Verfahrens nach Anspruch 17, bei dem das in Schritt (b₀) eingesetzte Wasser zwischen 0,5 und 5 Ges.-% eines oder mehrerer unter Lauryldimethylbenzylammoniumbromid oder Dioctylsulfosuccinat ausgewählter Tenside enthält.

19. Verfahren oder Variante davon nach Anspruch 18, für das bzw. die der Anteil an eingemischtem Kaliumbifluoridsalz 0,2 bis 4 kg pro Liter Wasser oder pro Liter wäßrige Säurelösung beträgt.
